(19) Europäisches Patentamt
European Patent Office
Office européen des brevets

(11) **EP 3 411 669 B1**

(12) **FASCICULE DE BREVET EUROPEEN**

(45) Date de publication et mention
de la délivrance du brevet:
**24.11.2021 Bulletin 2021/47**

(21) Numéro de dépôt: **17706554.7**

(22) Date de dépôt: **20.01.2017**

(51) Int Cl.:
***G01D 5/353*** *(2006.01)*

(86) Numéro de dépôt international:
**PCT/FR2017/050122**

(87) Numéro de publication internationale:
**WO 2017/134361 (10.08.2017 Gazette 2017/32)**

(54) **PROCÉDÉ ET DISPOSITIF DE SURVEILLANCE DU COMPORTEMENT MÉCANIQUE D'UNE CONDUITE SOUS-MARINE DE TRANSPORT DE FLUIDES SOUS PRESSION**

VERFAHREN UND VORRICHTUNG ZUR ÜBERWACHUNG DES MECHANISCHEN VERHALTENS EINER TIEFSEE-LEITUNG ZUM TRANSPORT VON UNTER DRUCK STEHENDEN FLÜSSIGKEITEN

METHOD AND DEVICE FOR MONITORING THE MECHANICAL BEHAVIOR OF A SUBMARINE CONDUCT FOR TRANSPORTING PRESSURIZED FLUIDS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.02.2016 FR 1650829**

(43) Date de publication de la demande:
**12.12.2018 Bulletin 2018/50**

(73) Titulaires:
• **Saipem SA**
**78180 Montigny-le-Bretonneux (FR)**
• **Cementys**
**75013 Paris (FR)**

(72) Inventeurs:
• **PIONETTI, François-Régis**
**50450 La Baleine (FR)**
• **AGOUMI, Jalil**
**94270 Le Kremlin-bicetre (FR)**
• **SUNDERMANN, Axel**
**91640 Fontenay-les-Briis (FR)**
• **PARIS, Jean-Baptiste**
**75015 Paris (FR)**
• **LAMOUR, Vincent**
**75013 Paris (FR)**

(74) Mandataire: **Cabinet Beau de Loménie**
**158, rue de l'Université**
**75340 Paris Cedex 07 (FR)**

(56) Documents cités:
**WO-A1-2014/184144      US-A1- 2003 174 924**
**US-A1- 2011 007 996      US-A1- 2015 285 626**

**EP 3 411 669 B1**

**EP 3 411 669 B1**

**Description**

Arrière-plan de l'invention

La présente invention se rapporte au domaine général des conduites sous-marines de transport de fluides reposant au fond de la mer ou assurant la liaison fond-surface pour le transfert d'hydrocarbures, par exemple de pétrole et de gaz, issus de puits de production sous-marins.

Les conduites sous-marines de transport de fluides sont couramment utilisées dans la production offshore d'hydrocarbures. Ainsi, dans un champ de production offshore, on exploite généralement plusieurs puits qui peuvent être séparés les uns des autres de plusieurs kilomètres, voire dizaines de kilomètres. Les fluides issus des divers puits doivent être collectés par des conduites posées au fond de la mer et transférés par des conduites de liaison fond-surface depuis une conduite sous-marine reposant au fond de la mer vers une installation en surface qui va les recueillir, par exemple au niveau d'un navire ou d'un point de collecte situé sur la côte.

Il existe différents types de conduites sous-marines utilisées pour le transport de fluides. L'invention s'intéresse plus particulièrement aux conduites coaxiales de type « Pipe In Pipe » ou PIP, c'est-à-dire « conduite dans une conduite », dans laquelle un tube en acier interne transporte les fluides et un tube en acier externe coaxial au précédent, appelé aussi « enveloppe externe », est en contact avec le milieu ambiant, c'est-à-dire avec l'eau.

Généralement, ces conduites coaxiales sont assemblées à terre en éléments de longueur unitaire (on parle de double, triple ou quadruple joints, ci-après indifféremment dénommées « quad-joints » pour quadruple sections de tube), de l'ordre de 10 à 100m selon la capacité de tenue en charge du système de pose. Ces quad-joints sont alors transportées en mer sur un navire de pose.

Lors de la pose, les quad-joints sont raccordés les uns aux autres à bord du navire et au fur et à mesure de leur pose en mer. La pose peut s'effectuer par l'intermédiaire d'une tour de pose en J positionnée sur le navire de pose. Avec la pose en J, la conduite sous-marine est typiquement descendue du navire de pose pratiquement verticale (entre +30° et -10° par rapport à la verticale). La pose en J est une pose caténaire simple dans laquelle l'inclinaison quasi-verticale de la conduite diminue au fur et à mesure de son déplacement vers le bas jusqu'à épouser la pente du fond de la mer.

Compte tenu de leur spécificité, les conduites sous-marines de transport de fluides sont conçues pour atteindre un haut niveau de performance thermique et des versions spécifiques ont été développées pour répondre de manière plus adaptée aux grands fonds, c'est à dire pour résister à la pression du fond de la mer. En effet, la pression de l'eau étant sensiblement de 0.1 MPa, soit environ 1 bar pour 10m de profondeur, la pression à laquelle doivent résister les conduites sous-marines est alors d'environ 10 MPa, soit environ 100 bars pour 1000m de profondeur et d'environ 30 MPa, soit environ 300 bars pour 3000m de profondeur.

Par ailleurs, les conduites sous-marines sont soumises à d'importantes contraintes mécaniques, à la fois au cours de leur pose au fond de la mer par l'intermédiaire de la tour de pose en J qui entraîne d'importantes déformations (notamment des flexions) de chacun des quad-joints de la conduite, mais aussi pendant la phase de production (auto-contraintes thermiques et contraintes dues aux sollicitations extérieures). En effet, lorsque la conduite sous-marine est installée au fond de la mer et que le réseau est en phase de production, le tube interne des quad-joints de la conduite est soumis à la pression élevée des fluides qu'il transporte (cette pression pouvant dépasser les 100 bars). De plus, il est fréquent que le fond marin sur lequel reposent la conduite bouge, ce qui entraîne des déplacements de la conduite, et donc des contraintes sur ces dernières.

Or, les contraintes mécaniques subies par les conduites sous-marines, et plus particulièrement les tubes internes de conduites PIP, ainsi que la température à laquelle elles sont soumises (les hydrocarbures issus des puits de production sous-marins sortent à une température de l'ordre de 70°C), risquent de provoquer des dégâts importants, voire une rupture, des conduites.

Le document US 2003/0174924 décrit un dispositif de surveillance du comportement mécanique d'une conduite sous-marine selon le préambule de la revendication 8.

Les documents US 2015/0285626 et US 2011/007996 décrivent d'autres dispositifs de surveillance connus comprenant deux fibres optiques positionnées en hélice.

Objet et résumé de l'invention

Il existe donc un besoin de pouvoir surveiller le comportement mécanique d'une conduite sous-marine de transport de fluides, aussi bien au cours de sa pose qu'en phase de production.

Conformément à l'invention, ce besoin est atteint grâce à un procédé de surveillance du comportement mécanique d'une conduite sous-marine de transport de fluides sous pression, la conduite sous-marine étant réalisée par assemblage d'une pluralité d'éléments unitaires de conduites mis bout à bout, le procédé comprenant :

2

une étape d'étalonnage mécanique consistant, à l'aide d'au moins un câble de mesure muni d'au moins un capteur à fibre optique utilisant au moins la rétrodiffusion de Brillouin et positionné sur toute la longueur des éléments unitaires de conduite, à mesurer les déformations subies par chaque élément unitaire de conduite lorsqu'il est soumis à terre à différentes sollicitations mécaniques de directions et d'intensités prédéterminées, et, à partir de ces mesures de déformations, à établir la signature mécanique de chaque élément unitaire de conduite ; et
une étape de surveillance consistant, à l'aide d'un câble de mesure muni d'au moins un capteur à fibre optique utilisant la rétrodiffusion de Brillouin et positionné en hélice à pas constant sur chaque élément unitaire de conduite avec une alternance du sens du pas de l'hélice pour deux éléments unitaire de conduite adjacents, à récupérer les variations du signal optique injecté dans lesdits capteurs à fibre optique lorsque la conduite est en service, et, à partir de ces variations du signal optique et de la signature mécanique de chaque élément unitaire de conduite, à déterminer les sollicitations subies par chaque élément unitaire de conduite.

Corrélativement, l'invention a pour objet un dispositif de surveillance du comportement mécanique d'une conduite sous-marine de transport de fluides sous pression, la conduite sous-marine étant réalisée par assemblage d'une pluralité d'éléments unitaires de conduites mis bout à bout, le dispositif comprenant, pour chaque élément unitaire de conduite, au moins un câble de mesure muni d'au moins un capteur à fibre optique utilisant la rétrodiffusion de Brillouin et positionné en hélice à pas constant sur ledit élément unitaire de conduite, deux éléments unitaires de conduite adjacents étant munis de câbles de mesure dont les capteurs à fibre optique sont positionnés en hélice avec une alternance du sens du pas de l'hélice.

Le procédé de surveillance selon l'invention est remarquable notamment en ce qu'il utilise des signatures mécaniques qui sont propres à chaque élément unitaire (ou quad-joint) de la conduite sous-marine pour surveiller les contraintes mécaniques subies par la conduite. Avant leur pose, au cours de l'étape d'étalonnage, chaque élément unitaire de conduite est testé à terre (en laboratoire ou en usine) et subit différentes sollicitations mécaniques de directions et d'intensités prédéterminées. Les déformations répercutées sur l'élément unitaire de conduite sont mesurées par les capteurs à fibre optique.

Au cours de l'étape de surveillance proprement dite, les mesures sont effectuées par des capteurs à fibre optique qui sont positionnés en hélice autour de quad-joint avec une alternance du sens du pas de l'hélice pour deux quad-joints adjacents. Cette disposition particulièrement avantageuse des capteurs à fibre optique (notamment en ce qu'elle nécessite un nombre réduit de capteurs à fibre optique pour la surveillance de multiples contraintes mécaniques) est rendue possible en partant de l'hypothèse sur l'homogénéité spatiale de certaines sollicitations mécaniques subies par les quad-joints de la conduite sous-marine par rapport au pas de l'hélice formée par le capteur à fibre optique (le pas de l'hélice est très petit par rapport à l'évolution spatiale des sollicitations). Les capteurs à fibre optique ainsi positionnés sont utilisés pour déterminer, au moyen des signatures mécaniques des éléments unitaires de conduite, les déformations subies en service par chacun des éléments unitaires de conduite. A partir de la connaissance du comportement mécanique de chaque élément unitaire de conduite, il est alors possible de reconstruire le comportement mécanique global de la conduite sous-marine, aussi bien au cours de sa pose que pendant la phase de production.

Le procédé et le dispositif de surveillance selon l'invention permettent en outre de connaître précisément l'état de la conduite sous-marine au niveau des raccordements entre les différents éléments unitaires de conduite, ce qui n'est pas possible avec une ligne unique de mesures sur toute la longueur de la conduite.

Le procédé selon l'invention est par ailleurs tout particulièrement adapté à la technique de pose en J de la conduite sous-marine au cours de laquelle aucune déformation permanente n'est induite à la conduite (on reste sous 90% de la limite élastique de la conduite). Une fois posée, la conduite reste toujours dans un domaine linéaire (à moins de 66% de la limite élastique), ce qui autorise une linéarisation des phénomènes de perturbation subis par la conduite (tels que les déformations élastiques).

La signature mécanique d'un élément unitaire de conduite peut comprendre une matrice de raideur dont les valeurs correspondent aux valeurs de déformation subie par l'élément unitaire de conduite lorsqu'il a été soumis à terre aux différentes sollicitations mécaniques. Dans ce cas, la détermination des déformations subies par chaque élément unitaire de conduite comprend l'inversion de cette matrice de raideur associée la signature mécanique de chaque élément unitaire de conduite. Ainsi, la matrice de raideur représente l'identité mécanique propre à chaque élément unitaire de conduite.

De préférence, l'hélice formée par le capteur à fibre optique de chaque élément unitaire de conduite forme un angle avec un axe longitudinal de la conduite sous-marine de 45° en valeur absolue.

Les sollicitations mécaniques de directions et d'amplitudes prédéterminées appliquées à terre à chaque élément unitaire de conduite peuvent comprendre l'une ou plusieurs des sollicitations suivantes : sollicitation en torsion, sollicitation en traction/compression, sollicitation en flexions, et sollicitation en pression.

Les câbles de mesure à capteurs à fibre optique peuvent être positionnés sur les éléments unitaires de conduite de sorte à s'étendre sensiblement parallèlement à un axe longitudinal de ladite conduite.

De préférence, les capteurs à fibre optique des câbles de mesure utilisant la rétrodiffusion de Brillouin sont des fibres monomodes.

Dans une application à la surveillance d'une conduite PIP, chaque élément unitaire de conduite peut comprendre un tube interne monté à l'intérieur d'un tube externe de façon coaxiale à celui-ci, les câbles de mesure à capteurs à fibre optique étant positionnés sur le tube interne dudit élément unitaire de conduite.

Le procédé peut comprendre en outre :

une étape d'étalonnage acoustique consistant, à l'aide du câble de mesure muni du capteur à fibre optique utilisant au moins la rétrodiffusion de Brillouin et positionné sur toute la longueur des éléments unitaires de conduite, à mesurer les variations de fréquences de chaque élément unitaire de conduite lorsqu'il est soumis à terre à différentes sollicitations acoustiques, et, à partir de ces variations de bruit, à établir une signature acoustique et vibratoire de chaque élément unitaire de conduite ; et

une étape de surveillance des variations de bruits à l'intérieur de la conduite sous-marine consistant à récupérer les variations de fréquences du signal optique injecté dans les capteurs à fibre optique lorsque la conduite est en service, et, à partir de ces variations de fréquences et de la signature acoustique et vibratoire de chaque élément unitaire de conduite, à déterminer les variations de bruits à l'intérieur de chaque élément unitaire de conduite.

Ainsi, les capteurs à fibre optique utilisant la rétrodiffusion de Brillouin peuvent non seulement fournir des informations sur les sollicitations mécaniques subies par la conduite, mais également des informations sur les variations de sources vibrantes environnantes. Parmi ces sources de vibrations environnantes, il est notamment possible de distinguer celles générées par l'élément unitaire de conduite sur lequel sont positionnés les capteurs à fibre optique et celle, générées par l'environnement extérieur (en l'occurrence le fond de la mer et tout ce qui lui est relié).

Brève description des dessins

D'autres caractéristiques et avantages de la présente invention ressortiront de la description faite ci-dessous, en référence aux dessins annexés qui en illustrent des exemples de réalisation dépourvus de tout caractère limitatif. Sur les figures :

- la figure 1 est une vue schématique d'une conduite sous-marine équipée d'un dispositif de surveillance selon l'invention ;
- la figure 2 est une vue schématique d'un quad-joint de conduite sous-marine auquel sont appliquées différentes sollicitations mécaniques en vue d'établir sa signature mécanique ; et
- la figure 3 est une vue en perspective montrant l'agencement des capteurs à fibre optique du dispositif de surveillance de la figure 1 sur deux quad-joints adjacents de la conduite sous-marine.

Description détaillée de l'invention

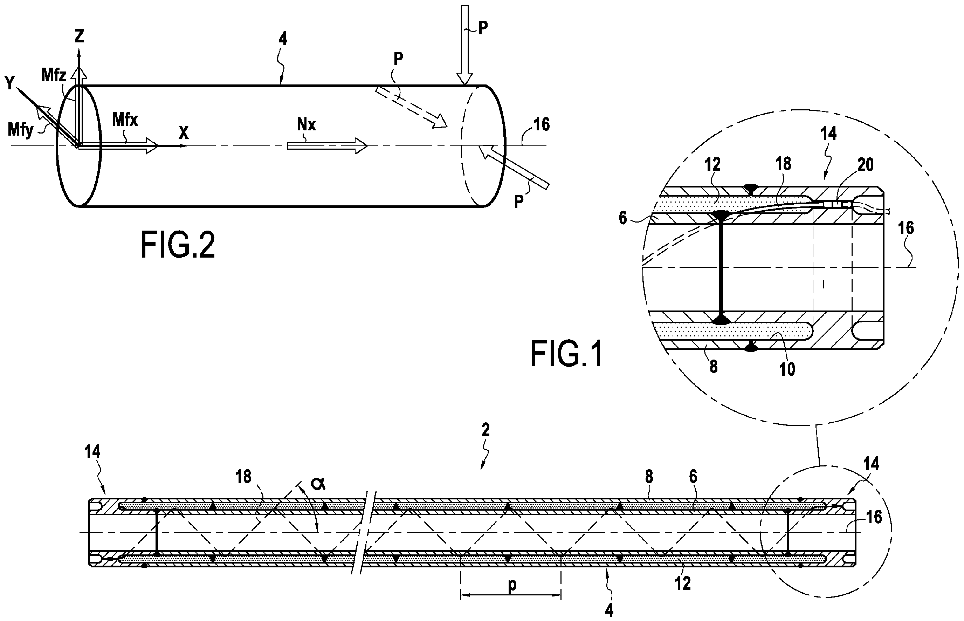

L'invention s'applique à toute conduite sous-marine reposant au fond de la mer et assurant un transport entre des puits de production d'hydrocarbures sous-marins, notamment de pétrole et de gaz, et une installation de surface, telle que la conduite sous-marine 2 représentée sur les figures 1 et 2.

La conduite sous-marine 2 représentée sur ces figures est typiquement assemblée à terre en plusieurs sections de conduite de longueur unitaire 4 de l'ordre de 10 à 100 m selon la capacité de tenue du système de pose. On parle également de « joints », notamment de « double joints » pour deux éléments unitaires de conduite assemblés entre eux, « triple joints » pour trois éléments unitaires de conduite assemblés entre eux, « quadruple joints » pour quatre éléments unitaires de conduite assemblés entre eux, etc. Pour la suite de la description, on emploiera de façon générique le terme « quad-joint » pour désigner un élément unitaire de conduite 4. Lors de la pose, ces quad-joints 4 sont raccordés les uns aux autres à bord du navire et au fur et à mesure de leur pose en mer.

Par ailleurs, la conduite sous-marine 2 est une conduite coaxiale de type « Pipe in Pipe » (ou « PIP »), c'est-à-dire que chaque quad-joint (ou élément unitaire de conduite) 4 comprend un tube en acier interne 6 destiné à transporter les hydrocarbures issus de puits de production et un tube en acier externe 8, coaxial au tube interne et appelé « enveloppe externe », qui est en contact direct avec l'eau environnante.

De façon connue, l'espace annulaire 10 formé entre le tube interne 6 et le tube externe 8 de chaque quad-joint 4 peut être rempli d'un matériau isolant 12 (ou être vidé de tout gaz) de sorte à former une couche d'isolant thermique limitant la déperdition de chaleur vers le milieu ambiant. A chacune de ces extrémités, le tube interne 6 peut être solidarisé au tube externe 8 par l'intermédiaire de pièces de jonction 14 qui viennent fermer l'espace annulaire 10.

Selon l'invention, il est prévu de surveiller le comportement mécanique d'une telle conduite sous-marine 2, c'est-à-dire de surveiller les contraintes mécaniques subies par celle-ci, lors de sa pose au fond de la mer et pendant la phase de production du réseau (c'est-à-dire lorsqu'elle est en service).

Le procédé de surveillance selon l'invention prévoit deux étapes principales : une étape dite d'étalonnage au cours de laquelle la signature mécanique de chaque quad-joint de la conduite sous-marine est obtenue ; et une étape de surveillance proprement dite au cours de laquelle, à partir de la signature mécanique de chaque quad-joint et des mesures réalisées par des capteurs à fibre optique lors de la pose de la conduite sous-marine et/ou pendant la phase de production du réseau, les contraintes subies par la conduite sous-marine sont déterminées.

Etape d'étalonnage

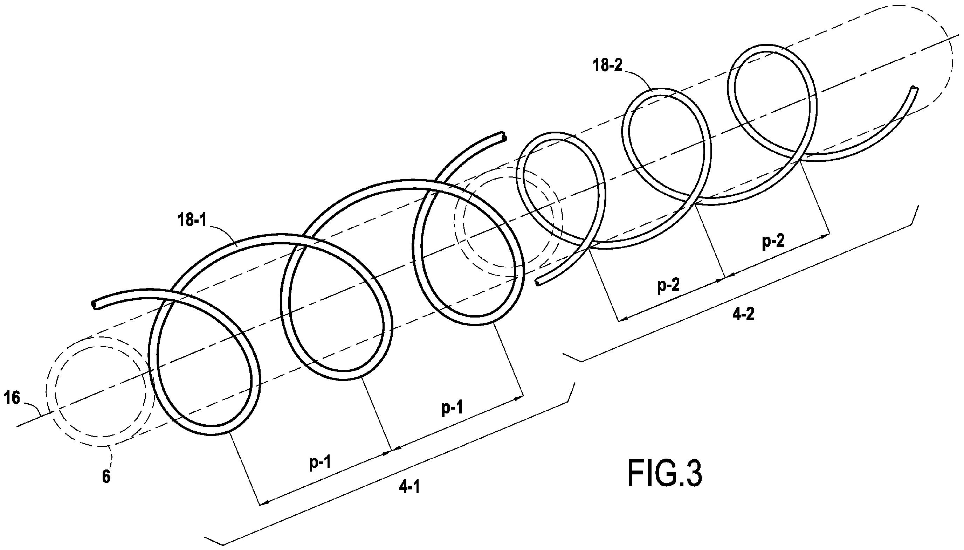

Cette étape d'étalonnage mécanique consiste à tester à terre chaque quad-joint de la conduite sous-marine pour en obtenir sa signature mécanique. Cette étape est décrite en détails dans la demande de brevet français déposée le 2 février 2016 par le Demandeur avec pour titre « Procédé de surveillance du comportement thermomécanique d'une conduite sous-marine de transport de fluides sous pression ».
A cet effet, chaque quad-joint subit en laboratoire ou en usine une série de différentes sollicitations mécaniques de directions et d'intensités prédéterminées et les déformations subies par le quad-joint au cours de ce test sont mesurées par des capteurs à fibre optique.
Plus précisément, le quad-joint 4 est équipé de câbles de mesure 16 munis de capteurs à fibre optique, chaque capteur à fibre optique étant destiné à mesurer un seul et même paramètre de déformation du quad-joint.
Les câbles de mesure peuvent être positionnés sur le tube interne 6 du quad-joint 4 (ils sont par exemple collés sur la surface externe de celui-ci) et s'étendre longitudinalement entre les deux extrémités du quad-joint comme décrit dans la demande de brevet français déposée le 2 février 2016 par le Demandeur avec pour titre « Procédé de surveillance du comportement thermomécanique d'une conduite sous-marine de transport de fluides sous pression ».
Les fibres optiques équipant les câbles de mesure sont des fibres monomodes utilisant la rétrodiffusion Brillouin pour les capteurs destinés à mesurer les contraintes mécaniques subies par le quad-joint.
Dans l'exemple décrit ci-après, les sollicitations mécaniques appliquées aux quad-joints de la conduite sous-marine sont les suivantes : sollicitation en torsion (autour de l'axe longitudinal 16 des quad-joints), sollicitation en flexions (dans un plan YZ transversal aux quad-joints), sollicitation en traction/compression (dans la direction de l'axe longitudinal des quad-joints) et sollicitation en pression interne aux quad-joints.
Ces sollicitations sont toutes définies par une direction et une intensité d'application qui sont prédéterminées. Ainsi, comme représenté sur la figure 2, la sollicitation en torsion appliquée au quad-joint 4 consiste en la création d'un moment de torsion (représenté Mtx sur la figure 3) dont la direction d'application est suivant l'axe X d'un repère orthonormé (O, X, Y, Z) propre au quad-joint. De même, la sollicitation en flexions appliquée au quad-joint consiste en la création de deux moments fléchissants (représentés Mfy et Mfz sur la figure 3) dont les directions d'application sont respectivement suivant les axes Y et Z du repère (O, X, Y, Z). La sollicitation en traction/compression appliquée au quad-joint (représentée sur la figure 3 par Nx) présente une direction d'application selon l'axe X. Enfin, la sollicitation en pression est représentée par P sur la figure 3 et sa direction d'application est radiale à la conduite.
Au cours du test, les différentes sollicitations détaillées ci-dessus sont appliquées à chaque quad-joint et un appareil de mesure optoélectronique de type OTDR (« Optical Time Domain Reflectometer » pour Réflectomètre Optique Temporel) communément utilisé pour caractériser les fibres optiques permet de mesurer les valeurs de déformation, notées $\varepsilon_i$, subies par le quad-joint.
Ainsi, grâce aux mesures $\varepsilon_1$ à $\varepsilon_5$ obtenues par les capteurs à fibre optique, il est possible d'obtenir, dans le cas de matériaux élastiques, la matrice de raideur $\Omega$ qui vérifie l'équation (1) suivante :

$$\begin{pmatrix} \varepsilon 1 \\ \varepsilon 2 \\ \varepsilon 3 \\ \varepsilon 4 \\ \varepsilon 5 \end{pmatrix} = \underbrace{\begin{pmatrix} a11 & a12 & a13 & a14 & a15 \\ a21 & a22 & a23 & a24 & a25 \\ a31 & a32 & a33 & a34 & a35 \\ a41 & a42 & a43 & a44 & a45 \\ a51 & a52 & a53 & a54 & a55 \end{pmatrix}}_{\Omega} \times \begin{pmatrix} Mtx \\ Mfy \\ Mfz \\ Nx \\ P \end{pmatrix} \qquad (1)$$

A partir des valeurs de déformation $\varepsilon_1$ à $\varepsilon_5$ mesurées par les capteurs à fibre optique et des valeurs d'intensité Mtx, Mfy, Mfz, Nx des différentes sollicitations mécaniques appliquées au quad-joint lors de l'étape d'étalonnage, il est alors possible de déterminer l'ensemble des paramètres a11, a12, ..., a55 de la matrice de raideur $\Omega$ propre au quad-joint. Comme les fibres optiques parcourent des chemins différents en surface du tube interne du quad-joint, cette matrice est inversable. Lors des essais d'étalonnage mécanique, les sollicitations doivent être limitées dans le domaine élastique des matériaux constitutifs du quad-joint.
Cette matrice de raideur $\Omega$ constitue une signature mécanique qui est propre à chaque quad-joint destiné à constituer la conduite sous-marine. En effet, les paramètres et les tolérances des matériaux constitutifs (concentricité et épaisseur des tubes, raideur de l'isolant inter-annulaire et des entretoises, caractéristiques des joints soudés, etc.) sont différents pour chaque quad-joint, de sorte que la matrice de raideur varie d'un quad-joint à un autre.

Les signatures mécaniques se présentent sous la forme de fichiers numériques qui sont stockés à bord d'une mémoire d'un système informatique équipant le navire de pose et/ou l'installation de surface pour être utilisés ultérieurement pour la surveillance du comportement mécanique de la conduite sous-marine au cours de l'étape de surveillance proprement dite décrite ci-après.

Etape d'étalonnage acoustique

Cette étape d'étalonnage acoustique se déroule dans les mêmes conditions opératoires que la phase d'étalonnage mécanique. Chaque quad-joint équipé de son capteur à fibre optique utilisant la rétrodiffusion de Brillouin est soumis à terre (i.e. en laboratoire ou en usine) à différentes sollicitations acoustiques et vibratoires.

Ces sollicitations acoustiques et vibratoires comprennent l'émission de bruits (dans un spectre de fréquences utile compris typiquement entre 0 et 50 kHz) dans différentes configurations : émission de bruits à l'intérieur du quad-joint rempli d'air par l'intermédiaire d'une barre reliant les deux extrémités du quad-joint, émission de bruits à l'intérieur du quad-joint rempli d'eau par l'intermédiaire d'une barre reliant ses deux extrémités, et émission de bruits à l'extérieur du quad-joint rempli au préalable d'air puis d'eau selon un protocole calibré pour chaque quad-joint (par exemple au moyen d'un système émettant une vibration sonore calibrée ou au moyen de pots vibrant mettant le quad-joint en vibration globale).

A chaque émission de bruits et de vibrations lors de cette étape de calibration, le réflectomètre optique temporel (OTDR) utilisé pour caractériser les capteurs à fibre optique permet de mesurer les variations de fréquences du quad-joint. Ces mesures se présentent par exemple sous une forme matricielle et constituent pour chaque quad-joint sa signature acoustique et vibratoire (c'est-à-dire son référentiel de base).

Comme pour les signatures mécaniques, les signatures acoustiques et vibratoires de tous les quad-joints se présentent sous la forme de fichiers numériques qui sont stockés à bord d'une mémoire du système informatique équipant le navire de pose et/ou l'installation de surface pour être utilisés ultérieurement pour la surveillance du comportement de la conduite sous-marine au cours de l'étape de surveillance proprement dite décrite ci-dessous.

Etape de surveillance

Comme représenté sur la figure 3, au cours de cette étape, les différents quad-joints 4 destinés à former la conduite sous-marine 2 sont chacun équipés d'un câble de mesure 18 muni d'au moins un capteur à fibre optique utilisant la rétrodiffusion de Brillouin et positionné en hélice autour de la conduite interne 6 du quad-joint 4 (ils sont par exemple collés sur la surface externe de celui-ci).

Plus précisément, le câble de mesure 18 d'un quad-joint 4 de la conduite sous-marine forme une hélice dont le pas $p$ est constant et qui forme un angle $\alpha$ avec l'axe longitudinal 16 de la conduite sous-marine, cet angle $\alpha$ étant de préférence égal à 45°.

De plus, pour deux quad-joints 4-1, 4-2 adjacents de la conduite sous-marine (voir la figure 3), les hélices formées par leurs câbles de mesure respectifs 18-1, 18-2 ont des pas respectifs $p$-1, $p$-2 qui sont identiques en valeur absolue mais qui sont de sens inverse. En d'autres termes, les angles $\alpha$ formés par ces hélices sont inverses (par exemple l'un de ces angles est de +45° tandis que l'autre angle est de -45° par rapport à l'axe longitudinal 16 de la conduite sous-marine).

Cette alternance du sens du pas des hélices formées par les câbles de mesure des quad-joints adjacents se retrouve sur toute la longueur de la conduite sous-marine. Elle part de l'hypothèse qu'à l'échelle de deux quad-joints consécutifs, les sollicitations mécaniques Nx, Mfz, Mfy, et P sont homogènes dans l'espace. Ainsi, avec un seul capteur à fibre optique, il est possible de calculer les valeurs de déformations Mtx, Mfy, Mfz, Nx, et P subies par chaque quad-joint.

Toujours au cours de l'étape de surveillance, les différents quad-joints de la conduite sous-marine ainsi équipés de leurs câbles de mesure sont raccordés les uns aux autres à bord du navire et au fur et à mesure de leur pose en mer comme cela est connu de l'homme de l'art. Ce raccordement implique notamment que les câbles de mesure 18 soient raccordés entre eux, par exemple en les faisant traverser des perçages 20 formés dans les pièces de jonction 14 (voir la loupe de la figure 1).

De plus, au cours de la pose, les quad-joints 4 sont indexés en rotation les uns par rapport aux autres, c'est-à-dire que le repère (O, X, Y, Z) propre à chaque quad-joint est repéré aussi bien en rotation qu'en translation dans un repère plus général à travers un système d'information géographique (SIG).

Au cours de la pose, et pendant toute la phase de production du réseau, les mesures réalisées par le réflectomètre optique temporel (OTDR) des capteurs à fibres optiques utilisant la rétrodiffusion de Brillouin sont analysées pour déterminer le comportement de la conduite sous-marine aux déformations qu'elle peut subir. Cette étape de récupération et d'analyse des mesures prises par le réflectomètre peut être réalisée par le système informatique équipé de moyens logiciels adéquats et présent à bord du navire de pose et/ou de l'installation de surface.

En effet, en partant de l'équation (1) décrite ci-dessus, et en inversant la matrice de raideur $\Omega$ propre à chaque quad-joint formant la conduite sous-matrice, il est possible de calculer, grâce à un logiciel de calcul équipant le système informatique, les valeurs de déformations Mtx, Mfy, Mfz, Nx, et P subies par chaque quad-joint en appliquant l'équation (3) ci-dessous :

$$\begin{pmatrix} Mtx \\ Mfy \\ Mfz \\ Nx \\ P \end{pmatrix} = \begin{pmatrix} a11 & a12 & a13 & a14 & a15 \\ a21 & a22 & a23 & a24 & a25 \\ a31 & a32 & a33 & a34 & a35 \\ a41 & a42 & a43 & a44 & a45 \\ a51 & a52 & a53 & a54 & a55 \end{pmatrix}^{-1} \times \begin{pmatrix} \varepsilon 1 \\ \varepsilon 2 \\ \varepsilon 3 \\ \varepsilon 4 \\ \varepsilon 5 \end{pmatrix} \qquad (3)$$

De la sorte, il est possible de connaître à tout moment au cours de la pose de la conduite sous-marine et pendant toute la phase de production du réseau les déformations mécaniques subies par chaque quad-joint formant la conduite sous-marine. Notamment, il est ainsi possible d'identifier avec précision à quel endroit de la conduite sous-marine se produit une déformation importante de la conduite pouvant conduire à des dégâts importants, voire une rupture, de la conduite, ou la formation d'un bouchon à l'intérieur de la conduite pouvant également occasionner une rupture de la conduite. Cette localisation est permise grâce aux phases d'étalonnage qui permettent de connaître précisément les longueurs et la localisation des fibres déployées dans la conduite sous-marine.

Quant à la surveillance des variations de bruits à l'intérieur de la conduite sous-marine, elle est obtenue en comparant les mesures réalisées pendant toute la phase de production du réseau par le réflectomètre optique temporel (OTDR) des capteurs à fibres optiques utilisant la rétrodiffusion de Brillouin avec les signatures acoustiques et vibratoires établies pour chaque quad-joint lors de l'étape d'étalonnage acoustique.

Cette étape de récupération et d'analyse des mesures prises par le réflectomètre optique temporel peut être réalisée par le système informatique équipé de moyens logiciels adéquats et présent à bord du navire de pose et/ou de l'installation de surface.

Par ailleurs, il est également possible de surveiller la température de la conduite sous-marine pendant toute la phase de production du réseau à partir de signatures thermiques établies pour chaque quad-joint comme cela est décrit en détails dans la demande de brevet français n° 16 50826 déposée le 2 février 2016 par le Demandeur avec pour titre « Procédé de surveillance du comportement thermomécanique d'une conduite sous-marine de transport de fluides sous pression ».

## Revendications

1. Procédé de surveillance du comportement mécanique d'une conduite sous-marine de transport de fluides sous pression, la conduite sous-marine (2) étant réalisée par assemblage d'une pluralité d'éléments unitaires de conduite (4) mis bout à bout, le procédé comprenant :

   une étape d'étalonnage mécanique consistant, à l'aide d'au moins un câble de mesure muni d'au moins un capteur à fibre optique utilisant au moins la rétrodiffusion de Brillouin et positionné sur toute la longueur des éléments unitaires de conduite, à mesurer les déformations subies par chaque élément unitaire de conduite lorsqu'il est soumis à terre à différentes sollicitations mécaniques de directions et d'intensités prédéterminées, et, à partir de ces mesures de déformations, à établir la signature mécanique de chaque élément unitaire de conduite ; et
   une étape de surveillance consistant, à l'aide d'un câble de mesure (18) muni d'au moins un capteur à fibre optique utilisant la rétrodiffusion de Brillouin et positionné en hélice à pas ($\underline{p}$) constant sur chaque élément unitaire de conduite avec une alternance du sens du pas de l'hélice pour deux éléments unitaires de conduite adjacents, à récupérer les variations du signal optique injecté dans lesdits capteurs à fibre optique lorsque la conduite est en service, et, à partir de ces variations du signal optique et de la signature mécanique de chaque élément unitaire de conduite, à déterminer les sollicitations subies par chaque élément unitaire de conduite.

2. Procédé selon la revendication 1, dans lequel l'hélice formée par le capteur à fibre optique de chaque élément unitaire de conduite forme un angle ($\underline{\alpha}$) avec un axe longitudinal (16) de la conduite sous-marine de 45° en valeur absolue.

**3.** Procédé selon l'une des revendications 1 et 2, dans lequel la signature mécanique d'un élément unitaire de conduite comprend une matrice de raideur dont les valeurs correspondent aux valeurs de déformation subie par l'élément unitaire de conduite lorsqu'il a été soumis à terre aux différentes sollicitations mécaniques, la détermination des déformations subies par chaque élément unitaire de conduite comprenant l'inversion de la matrice de raideur associée à la signature mécanique de chaque élément unitaire de conduite.

**4.** Procédé selon quelconque des revendications 1 à 3, dans lequel les sollicitations mécaniques de directions et d'amplitudes prédéterminées appliquées à terre à chaque élément unitaire de conduite comprennent l'une ou plusieurs des sollicitations suivantes : sollicitation en torsion, sollicitation en traction/compression, sollicitation en flexions, et sollicitation en pression.

**5.** Procédé selon l'une quelconque des revendications 1 à 4, dans lequel les capteurs à fibre optique des câbles de mesure utilisant la rétrodiffusion de Brillouin sont des fibres monomodes.

**6.** Procédé selon l'une quelconque des revendications 1 à 5, dans lequel chaque élément unitaire de conduite (4) comprend un tube interne (6) monté à l'intérieur d'un tube externe (8) de façon coaxiale à celui-ci, les câbles de mesure à capteurs à fibre optique étant positionnés sur le tube interne dudit élément unitaire de conduite.

**7.** Procédé selon l'une quelconque des revendications 1 à 6, comprenant en outre :

une étape d'étalonnage acoustique consistant, à l'aide du câble de mesure muni du capteur à fibre optique utilisant au moins la rétrodiffusion de Brillouin et positionné sur toute la longueur des éléments unitaires de conduite, à mesurer les variations de fréquences de chaque élément unitaire de conduite lorsqu'il est soumis à terre à différentes sollicitations acoustiques, et, à partir de ces variations de bruit, à établir une signature acoustique et vibratoire de chaque élément unitaire de conduite ; et
une étape de surveillance des variations de bruits à l'intérieur de la conduite sous-marine consistant à récupérer les variations de fréquences du signal optique injecté dans les capteurs à fibre optique lorsque la conduite est en service, et, à partir de ces variations de fréquences et de la signature acoustique et vibratoire de chaque élément unitaire de conduite, à déterminer les variations de bruits à l'intérieur de chaque élément unitaire de conduite.

**8.** Dispositif de surveillance du comportement mécanique d'une conduite sous-marine de transport de fluides sous pression, le dispositif comprenant une conduite sous-marine (2) réalisée par assemblage d'une pluralité d'éléments unitaires de conduites (4) mis bout à bout, le dispositif comprenant, pour chaque élément unitaire de conduite, au moins un câble de mesure (18) muni d'au moins un capteur à fibre optique utilisant la rétrodiffusion de Brillouin et positionné en hélice à pas constant sur ledit élément unitaire de conduite, **caractérisé en ce que** deux éléments unitaires de conduite adjacents sont munis de câbles de mesure dont les capteurs à fibre optique sont positionnés en hélice avec une alternance du sens du pas de l'hélice.

**Patentansprüche**

**1.** Verfahren zur Überwachung des mechanischen Verhaltens einer Unterwasserleitung zum Transport von unter Druck stehenden Fluiden, wobei die Unterwasserleitung (2) durch Zusammenfügen von mehreren einstückigen Leitungselementen (4) Ende an Ende hergestellt ist, wobei das Verfahren umfasst:

einen Schritt der mechanischen Kalibrierung, bestehend aus, mit Hilfe von mindestens einem Messkabel, das mit mindestens einem Glasfasersensor versehen ist, der mindestens die Brillouin-Rückstreuung verwendet und über die gesamte Länge der einstückigen Leitungselemente positioniert ist, dem Messen der Verformungen, die jedes einstückige Leitungselement erleidet, wenn es am Boden unterschiedlichen mechanischen Beanspruchungen in vorgegebenen Richtungen und Intensitäten ausgesetzt ist, und anhand dieser Messungen von Verformungen, dem Ermitteln der mechanischen Signatur jedes einstückigen Leitungselements, und
einen Schritt der Überwachung, bestehend aus, mit Hilfe eines Messkabels (18), das mit mindestens einem Glasfasersensor versehen ist, der die Brillouin-Rückstreuung verwendet und schraubenförmig mit konstanter Steigung (p) auf jedem einstückigen Leitungselement positioniert ist, mit abwechselnder Richtung der Steigung der Schraube für zwei benachbarte einstückige Leitungselemente, dem Erhalten der Variationen des optischen Signals, das in die Glasfasersensoren eingespeist wird, wenn die Leitung in Betrieb ist, und anhand dieser Variationen des optischen Signals und der mechanischen Signatur jedes einstückigen Leitungselements, dem Bestimmen der Beanspruchungen, die jedes einstückige Leitungselement erleidet.

2. Verfahren nach Anspruch 1, wobei die durch den Glasfasersensor jedes einstückigen Leitungselements gebildete Schraube einen Winkel ($\alpha$) von 45° als Absolutwert mit einer Längsachse (16) der Unterwasserleitung bildet.

3. Verfahren nach einem der Ansprüche 1 und 2, wobei die mechanische Signatur eines einstückigen Leitungselements eine Matrix der Steifigkeit umfasst, deren Werte den Werten der Verformung entsprechen, die das einstückige Leitungselement erleidet, wenn es am Boden unterschiedlichen mechanischen Beanspruchungen ausgesetzt worden ist, wobei die Bestimmung von Verformungen, die jedes einstückige Leitungselement erleidet, die Umkehrung der Matrix der Steifigkeit in Verbindung mit der mechanischen Signatur jedes einstückigen Leitungselements umfasst.

4. Verfahren nach einem der Ansprüche 1 bis 3, wobei die mechanischen Beanspruchungen in vorgegebenen Richtungen und Amplituden, die am Boden auf jedes einstückige Leitungselement ausgeübt werden, eine oder mehrere der folgenden Beanspruchungen umfassen: Torsionsbeanspruchung, Traktions-/Kompressionsbeanspruchung, Flexionsbeanspruchung und Druckbeanspruchung.

5. Verfahren nach einem der Ansprüche 1 bis 4, wobei die Glasfasersensoren der Messkabel, welche die Brillouin-Rückstreuung verwenden, Monomodefasern sind.

6. Verfahren nach einem der Ansprüche 1 bis 5, wobei jedes einstückige Leitungselement (4) ein inneres Rohr (6) umfasst, das auf koaxiale Weise im Inneren eines äußeren Rohres (8) daran montiert ist, wobei die Messkabel der Glasfasersensoren auf dem inneren Rohr des einstückigen Leitungselements positioniert sind.

7. Verfahren nach einem der Ansprüche 1 bis 6, ferner umfassend:

einen Schritt der akustischen Kalibrierung, bestehend aus, mit Hilfe des Messkabels, das mit dem Glasfasersensor versehen ist, der mindestens die Brillouin-Rückstreuung verwendet und über die gesamte Länge der einstückigen Leitungselemente positioniert ist, dem Messen der Frequenzvariationen jedes einstückigen Leitungselements, wenn es am Boden unterschiedlichen akustischen Beanspruchungen ausgesetzt ist, und anhand dieser Geräuschvariationen, dem Ermitteln einer akustischen und schwingenden Signatur jedes einstückigen Leitungselements, und
einen Schritt der Überwachung der Geräuschvariationen im Inneren der Unterwasserleitung, bestehend aus dem Erhalten der Frequenzvariationen des optischen Signals, das in die Glasfasersensoren eingespeist wird, wenn die Leitung in Betrieb ist, und anhand dieser Frequenzvariationen und der akustischen und schwingenden Signatur jedes einstückigen Leitungselements, dem Bestimmen der Geräuschvariationen im Inneren jedes einstückigen Leitungselements.

8. Vorrichtung zur Überwachung des mechanischen Verhaltens einer Unterwasserleitung zum Transport von unter Druck stehenden Fluiden, wobei die Vorrichtung eine Unterwasserleitung (2) umfasst, die durch Zusammenfügen von mehreren einstückigen Leitungselementen (4) Ende an Ende hergestellt ist, wobei die Vorrichtung für jedes einstückige Leitungselement mindestens ein Messkabel (18) umfasst, das mit mindestens einem Glasfasersensor versehen ist, der die Brillouin-Rückstreuung verwendet und schraubenförmig mit konstanter Steigung auf dem einstückigen Leitungselement positioniert ist, **dadurch gekennzeichnet, dass** zwei benachbarte einstückige Leitungselemente mit Messkabeln versehen sind, deren Glasfasersensoren schraubenförmig positioniert sind, mit abwechselnder Richtung der Steigung der Schraube.

**Claims**

1. A method of monitoring the mechanical behavior of an undersea pipe for transporting fluid under pressure, the undersea pipe (2) being made by assembling together a plurality of unit pipe elements (4) arranged end to end, the method comprising:

• a mechanical calibration step consisting in using at least one measurement cable having at least one optical fiber sensor using at least Brillouin backscattering and positioned along the entire length of the unit pipe elements to measure the deformations experienced by each unit pipe element while it is being subjected on land to various different mechanical stresses in predetermined directions and of predetermined magnitudes, and, on the basis of the deformation measurements, in establishing the mechanical signature of each unit pipe element; and
• a monitoring step consisting in using a measurement cable (18) having at least one optical fiber sensor that makes use of Brillouin backscattering and that is helically positioned at a constant pitch ($p$) on each unit pipe element, with the handedness of the helical pitch alternating for two adjacent unit pipe elements, to recover variations in the optical signal injected into said optical fiber sensors while the pipe is in service, and, on the basis of such variations in the optical signal and of the mechanical signature of each unit pipe element, to determine the stresses experienced by each unit pipe element.

2. A method according to claim 1, wherein the helix formed by the optical fiber sensor of each unit pipe element forms an angle ($\alpha$) having an absolute value of 45° with a longitudinal axis (16) of the undersea pipe.

3. A method according to claim 1 or claim 2, wherein the mechanical signature of a unit pipe element comprises a stiffness matrix having values that correspond to the values of deformation that were experienced by the unit pipe element while it was being subjected on land to the various different mechanical stresses, and the deformation being experienced by each unit pipe element is determined by inverting the stiffness matrix associated with the mechanical signature of each unit pipe element.

4. A method according to any one of claims 1 to 3, wherein the mechanical stresses of predetermined directions and amplitudes applied on land to each unit pipe element comprise one or more of the following stresses: twisting stress; traction/compression stress; bending stress; and pressure stress.

5. A method according to any one of claims 1 to 4, wherein the measurement cable optical fiber sensors that use Brillouin backscattering are monomode fibers.

6. A method according to any one of claims 1 to 5, wherein each unit pipe element (4) comprises an inner tube (6) mounted coaxially inside an outer tube (8), the optical fiber sensor measurement cables being positioned on the inner tube of said unit pipe element.

7. A method according to any one of claims 1 to 6, further comprising:

   • an acoustic calibration step consisting in using the measurement cable having the optical fiber sensor that uses at least Brillouin backscattering and that is positioned along the entire length of the unit pipe elements to measure the frequency variations of each unit pipe element while it is being subjected on land to various different acoustic and vibratory stresses, and, on the basis of these noise variations, to establish an acoustic signature for each unit pipe element; and
   • a step of monitoring noise variations inside the undersea pipe, consisting in recovering the frequency variations of the optical signal injected into the optical fiber sensors while the pipe is in service, and, on the basis of the frequency variations and of the acoustic and vibratory signature of each unit pipe elements, in determining the noise variations inside each unit pipe element.

8. A device for monitoring the mechanical behavior of an undersea pipe for transporting fluid under pressure, the device comprising an undersea pipe (2) being made by assembling together a plurality of unit pipe elements (4) end to end, the device comprising, for each unit pipe element, at least one measurement cable (18) having at least one optical fiber sensor using Brillouin backscattering and positioned as a helix of constant pitch on said unit pipe element, two adjacent unit pipe elements being provided with measurement cables in which the optical fiber sensors are helically positioned with helical pitches of alternating handedness.

FIG.1

FIG.2

FIG.3

**EP 3 411 669 B1**

## RÉFÉRENCES CITÉES DANS LA DESCRIPTION

**Documents brevets cités dans la description**

- US 20030174924 A
- US 20150285626 A
- US 2011007996 A
- FR 1650826